# EUROPÄISCHE PATENTSCHRIFT

(11) **EP 1 577 053 B1**
(45) Veröffentlichungstag und Bekanntmachung des Hinweises auf die Patenterteilung: **24.05.2006**
(21) Anmeldenummer: 04400014.9
(22) Anmeldetag: 01.03.2004
(51) Int. Cl.: B23Q 1/58, F15B 15/00, F16C 29/00

(54) **Linearantrieb mit einem von zwei Führungseinheiten flankierten Schlitten**
Linear actuator with a slide guided on two side guides
Actionneur linéaire avec un chariot flanqué par deux unités de guidage

(43) Veröffentlichungstag der Anmeldung: 21.09.2005
(60) Teilanmeldung: 05022498.9
(73) Patentinhaber: FESTO AG & Co, 73734 Esslingen (DE)
(72) Erfinder: Angué, Eric, 70806 Kornwestheim (DE); Kopp, Simone, 73734 Esslingen (DE)
(74) Vertreter: Abel, Martin

(56) Entgegenhaltungen:
- US-A- 4 013 280
- US-A- 4 726 283

## Beschreibung

Die Erfindung betrifft einen Linearantrieb, mit einem in kartesischer Anordnung eine Längsachse, eine Querachse und eine Hochachse aufweisenden Antriebsgehäuse, das einen längsverlaufenden, in Richtung der Querachse außermittig angeordneten Antriebsraum definiert, in dem sich zu einer Linearbewegung antreibbare Antriebsmittel befinden, die mit einem außen am Antriebsgehäuse über eine Führungseinrichtung linear verstellbar geführten Schlitten antriebsmäßig gekoppelt sind, wobei die Führungseinrichtung zwei parallel und mit Abstand zueinander in einer zur Hochachse rechtwinkeligen Führungsebene angeordnete, jeweils eine gehäuseseitige Führungsbahn enthaltende Führungseinheiten aufweist, die so angeordnet sind, dass der Schlitten längsseits außen von den beiden Führungseinheiten flankiert wird, und wobei die Führungsebene in Richtung der Hochachse versetzt zum Antriebsraum angeordnet ist, der in Richtung der Querachse wenigstens ein Stück weit von einem längsseitigen Randabschnitt des Schlittens übergriffen wird.

Ein aus der EP 0683010 B1 bekannter Linearantrieb verfügt über ein an der Oberseite abgestuftes Antriebsgehäuse, wobei der Antriebsraum in der Querrichtung des Antriebsgehäuses außermittig in einem erhabenen Gehäuseabschnitt untergebracht ist, während ein mit den im Antriebsraum angeordneten Antriebsmitteln bewegungsgekoppelter Schlitten auf gleicher Höhe mit dem Antriebsraum längsseits neben diesem über eine Führungseinrichtung am Antriebsgehäuse linear verstellbar geführt ist. Die Führungseinrichtung enthält zwei parallel und mit Abstand zueinander in einer zur Hochachse des Antriebsgehäuses rechtwinkeligen Führungsebene angeordnete Führungseinheiten, die jeweils eine am Antriebsgehäuse angeordnete gehäuseseitige Führungsbahn enthalten. Die beiden Führungseinheiten sitzen unterhalb des Schlittens und werden von seitlichen Randabschnitten des Schlittens übergriffen. Der daraus resultierende geringe Querabstand zwischen den beiden Führungseinheiten beeinträchtigt die Stabilität der Schlittenführung vor allem bei der Bewegung verhältnismäßig hoher Massen. Außerdem besitzt der Linearantrieb eine relativ große Baubreite.

Aus der EP 0713748 B1 geht ein Linearantrieb hervor, bei dem der Antriebsraum zentral im Antriebsgehäuse angeordnet ist, wobei der Schlitten in Richtung der Hochachse über dem Antriebsraum platziert ist. Auch hier sitzen die beiden Führungseinheiten der Führungseinrichtung unterhalb des Schlittens und haben einen relativ geringen Querabstand, sodass durch unsymmetrisch am Schlitten angreifende Massen hervorgerufene Kippkräfte unter Umständen zu einem erhöhten Verschleiß führen.

Aus der US 4,013,280 A ist ein Linearantrieb der eingangs genannten Art bekannt, der ein im Querschnitt U-förmiges Antriebsgehäuse aufweist, dessen Innenraum einen Antriebsraum definiert, der Antriebsmittel beinhaltet, die mit einem Schlitten zusammenarbeiten. Der Schlitten übergreift den Antriebsraum und ist über ihn seitlich flankierende Führungseinheiten an den Seitenwänden des Antriebsraumes verschiebbar geführt. Innerhalb des Antriebsraumes befinden sich neben den Antriebsmitteln zur Bestimmung der Linearbewegung des Schlittens dienende Komponenten.

Es ist die Aufgabe der vorliegenden Erfindung, einen Linearantrieb zu schaffen, der bei kompakten Abmessungen eine stabile Abstützung des Schlittens durch die diesem zugeordnete Führungseinrichtung gewährleistet.

Zur Lösung dieser Aufgabe ist vorgesehen, dass das Antriebsgehäuse seitlich neben dem Antriebsraum eine kanalartige Gehäuseausnehmung aufweist, deren offene Längsseite von dem Schlitten überspannt wird, wobei beiden Seitenwänden der Gehäuseausnehmung jeweils eine der gehäuseseitigen Führungsbahnen zugeordnet ist, von denen sich eine über dem Antriebsraum befindet, und wobei der Schlitten die Gehäuseausnehmung positionsabhängig über eine mehr oder weniger große Länge abdeckt, und dass zwischen dem Schlitten und dem Antriebsgehäuse wirksame Hubbegrenzungsmittel vorhanden sind, die einen innerhalb der Gehäuseausnehmung angeordneten, vom Schlitten übergriffenen gehäusefesten ersten Gegenanschlag aufweisen, der mit einem innerhalb der Gehäuseausnehmung am Schlitten angeordneten ersten Anschlag zusammenwirkt

Auf diese Weise wird der Schlitten an seinen Flanken längsseits außen geführt, was einen relativ großen Abstand zwischen den beiden Führungseinheiten zur Folge hat, sodass der Schlitten gegen auf ihn einwirkende Kippkräfte stabil abgestützt wird. Indem sich der Schlitten mit einem seiner Randabschnitte wenigstens ein Stück weit über den Antriebsraum hinweg erstreckt, lässt sich die Breite des Antriebsgehäuses optimal ausnutzen, wobei der den Antriebsraum definierende Bestandteil des Antriebsgehäuses gleichzeitig als Träger für die Führungsbahn der zugeordneten Führungseinheit fungiert. Durch die seitliche Führung des Schlittens besteht überdies die Möglichkeit, den in Richtung der Hochachse zwischen dem Schlitten und dem Antriebsgehäuse befindlichen Zwischenraum für Hubbegrenzungsmaßnahmen zu nutzen. Seitlich neben dem Antriebsraum verfügt das Antriebsgehäuse über eine kanalartige Gehäuseausnehmung, deren offene Längsseite von dem Schlitten überspannt wird, wobei jeder der beiden Seitenwände der Gehäuseausnehmung jeweils eine der gehäuseseitigen Führungsbahnen zugeordnet ist und wobei der Schlitten die Gehäuseausnehmung entsprechend der momentan eingenommenen Schlittenposition entlang einer mehr oder weniger großen Länge abdeckt. Innerhalb der Gehäuseausnehmung befindet sich ein vom Schlitten übergriffener gehäusefester erster Gegenanschlag, der mit einem innerhalb der Gehäuseausnehmung am Schlitten angeordneten ersten Anschlag zur Hubbegrenzung zusammenwirkt.

Vorteilhafte Weiterbildungen der Erfindung gehen aus den Unteransprüchen hervor.

Als vorteilhaft hat es sich erwiesen, den Schlitten so anzuordnen, dass er den Antriebsraum nicht über dessen gesamte Breite hinweg überragt. Auf diese Weise verbleibt ein sich an den Randabschnitt des Schlittens anschließender Randabschnitt des Antriebsgehäuses, in dem mindestens eine längsverlaufende Verankerungsnut vorgesehen werden kann, der eine Befestigung von zur Positionsabfrage dienenden Sensoren ermöglicht. Als optimal hat es sich erwiesen, die dem Antriebsraum zugeordnete gehäuseseitige Führungsbahn so zu platzieren, dass sie im Wesentlichen über dem in Richtung der Hochachse orientierten oberen Scheitelbereich des Antriebsraumes liegt.

Zweckmäßigerweise ist der Schlitten in Richtung der Hochachse so in die kanalartige Gehäuseausnehmung versenkt, dass er an seinen beiden Längsseiten von den Seitenwänden der Gehäuseausnehmung flankiert wird. Dort befinden sich dann auch die Führungseinheiten.

Ein weiteres Paar zweiter Anschläge und Gegenanschläge kann für die Hubbegrenzung in der entgegengesetzten Hubrichtung vorgesehen sein.

Die in Richtung der Querachse vom Antriebsraum weiter entfernte Seitenwand der Gehäuseausnehmung verfügt zweckmäßigerweise über mindestens eine Wanddurchbrechung, in die der erste Gegenanschlag von außen her so einsetzbar ist, dass er seitlich in die Gehäuseausnehmung und dort in die Bewegungsbahn des ersten Anschlages hineinragt. Um besonders variabel unterschiedliche Schlittenendpositionen vorgeben zu können, kann die Seitenwand mehrere, in Hubrichtung des Schlittens zueinander beabstandete Wanddurchbrechungen aufweisen, die wahlweise mit dem ersten Gegenanschlag bestückt werden können.

Die kanalartige Gehäuseausnehmung ist an einem Endbereich des Antriebsgehäuses zweckmäßigerweise durch eine Abschlusswand stirnseitig begrenzt. Diese Abschlusswand kann eine in Hubrichtung des Schlittens mit dem ersten Anschlag fluchtende fensterartige Durchbrechung aufweisen, durch die hindurch der erste Anschlag für eventuell erforderliche Einstellarbeiten zugänglich ist. Außerdem können die den Schlitten axial überragenden Längenabschnitte des ersten Anschlages in die fensterartige Durchbrechung eintauchen oder gar durch diese Durchbrechung hindurchragen, wenn der Schlitten die zugeordnete Schlittenendposition erreicht. Auf diese Weise sind besonders kompakte Längenabmessungen des Linearantriebes möglich.

In Verbindung mit der fensterartigen Durchbrechung kann der Endbereich des Schlittens als Ausschiebekopf ausgelegt sein, der eventuell in die kanalartige Gehäuseausnehmung eingedrungene Verunreinigungen bei der Hubbewegung des Schlittens durch die fensterartige Durchbrechung hindurch ausschiebt. Dadurch kann verschmutzungsbedingten Funktionsbeeinträchtigungen vorgebeugt werden.

Der Linearantrieb könnte prinzipiell für eine stangenlose Kraftübertragung zwischen den Antriebsmitteln und dem Schlitten ausgelegt sein. Als besonders vorteilhaft erweist sich allerdings eine Bauform, bei der die Antriebsmittel über eine stirnseitig aus dem Antriebsgehäuse herausragende Koppelstange mit dem Schlitten verbunden sind. Ist eine variable Positionierung des Schlittens gewünscht, kann in das Antriebsgehäuse eine Klemmeinheit eingesetzt sein, die von der Koppelstange durchsetzt wird, sodass sich letztere nach Bedarf axial unbeweglich festsetzen lässt, was gleichzeitig ein Blockieren des bewegungsgekoppelten Schlittens zur Folge hat.

Nachfolgend wird die Erfindung anhand der beiliegenden Zeichnung näher erläutert. In dieser zeigen:
- Fig. 1: eine bevorzugte erste Bauform des Linearantriebes in einer perspektivischen Rückansicht bei eingefahrener Schlittenendposition,
- Fig. 2: den Linearantrieb aus Fig. 1 in einer entsprechenden Darstellung bei ausgefahrener Schlittenendposition,
- Fig. 3: den in Fig. 1 gezeigten Zustand des Linearantriebes in einer perspektivischen Vorderansicht,
- Fig. 4: den in Fig. 2 gezeigten Zustand des Linearantriebes in einer perspektivischen Vorderansicht, wobei der Einsatz eines auswechselbaren ersten Gegenanschlages angedeutet ist,
- Fig. 5: eine Rückansicht des Linearantriebes mit Blickrichtung gemäß Pfeil V aus Fig. 2,
- Fig. 6: einen Querschnitt durch den Linearantrieb gemäß Schnittlinie VI-VI aus Fig. 2,
- Fig. 7: einen Querschnitt durch den Linearantrieb gemäß Schnittlinie VII-VII aus Fig. 2,

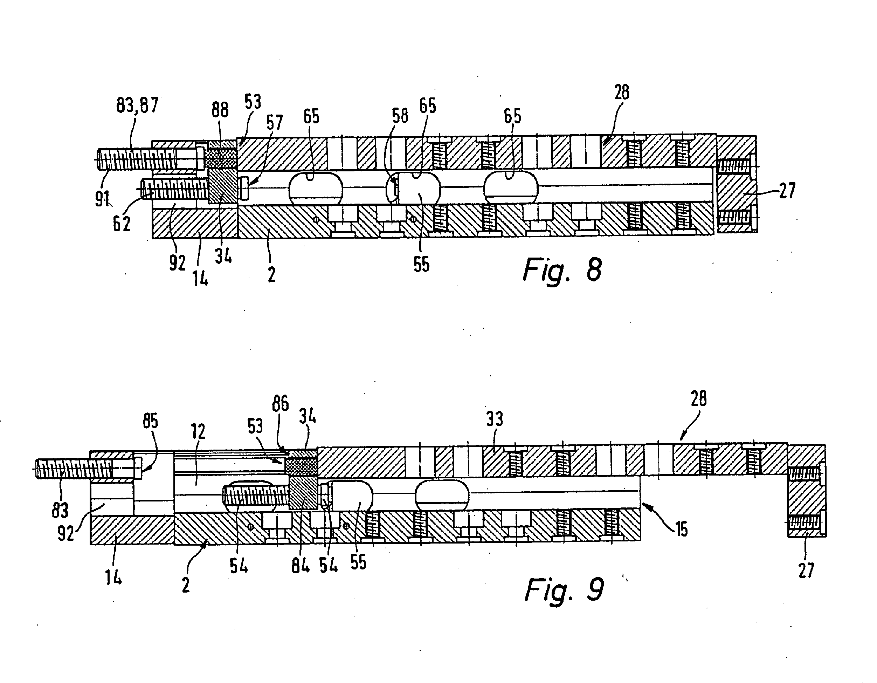

- Fig. 8: den Linearantrieb bei eingefahrener Schlittenendposition gemäß Schnittlinie VIII-VIII aus Fig. 5,
- Fig. 9: einen Längsschnitt des Linearantriebes gemäß Schnittlinie VIII-VIII aus Fig. 5, wobei der Schlitten die ausgefahrene Schlittenendposition gemäß Fig. 2 und 4 einnimmt,
- Fig. 10: einen Längsschnitt bei dem in Fig. 8 gezeigten Betriebszustand und gemäß Schnittlinie X-X aus Fig. 5,
- Fig. 11: einen Längsschnitt bei dem in Fig. 9 gezeigten Betriebszustand und wiederum gemäß Schnittlinie X-X,
- Fig. 12: einen weiteren Längsschnitt durch den Linearantrieb bei die eingefahrene Schlittenposition einnehmendem Schlitten gemäß Schnittlinie XII-XII aus Fig. 5,

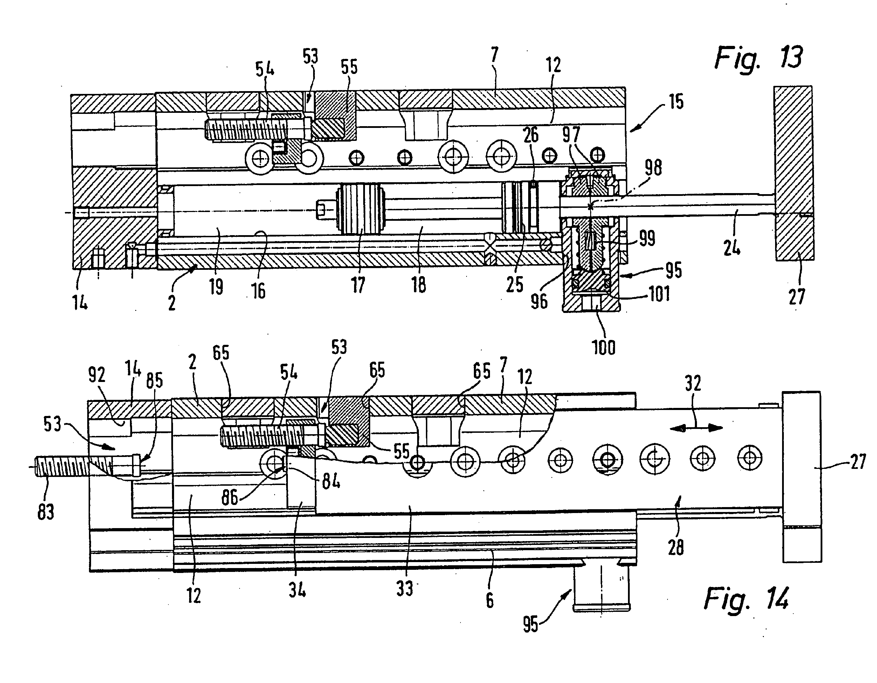

- Fig. 13: einen entsprechend der Fig. 12 gelegten Schnitt durch den Linearantrieb bei die ausgefahrene Schlittenposition einnehmendem Schlitten und

- Fig. 14: eine teilweise aufgebrochene Draufsicht des Linearantriebes mit Blickrichtung gemäß Pfeil XIV aus Fig. 5 in der ausgefahrenen Schlittenendposition.

Der in der Zeichnung abgebildete Linearantrieb ist zur Betätigung mit Fluidkraft ausgelegt, könnte allerdings auch elektrisch aktivierbar sein.

Der Linearantrieb besitzt ein Längsgestalt aufweisendes Antriebsgehäuse 2, mit einer Längsachse 3, einer dazu rechtwinkeligen Querachse 4 und einer zu den beiden vorgenannten Achsen wiederum rechtwinkeligen Hochachse 5. Die genannten drei Achsen spannen also ein kartesisches System auf.

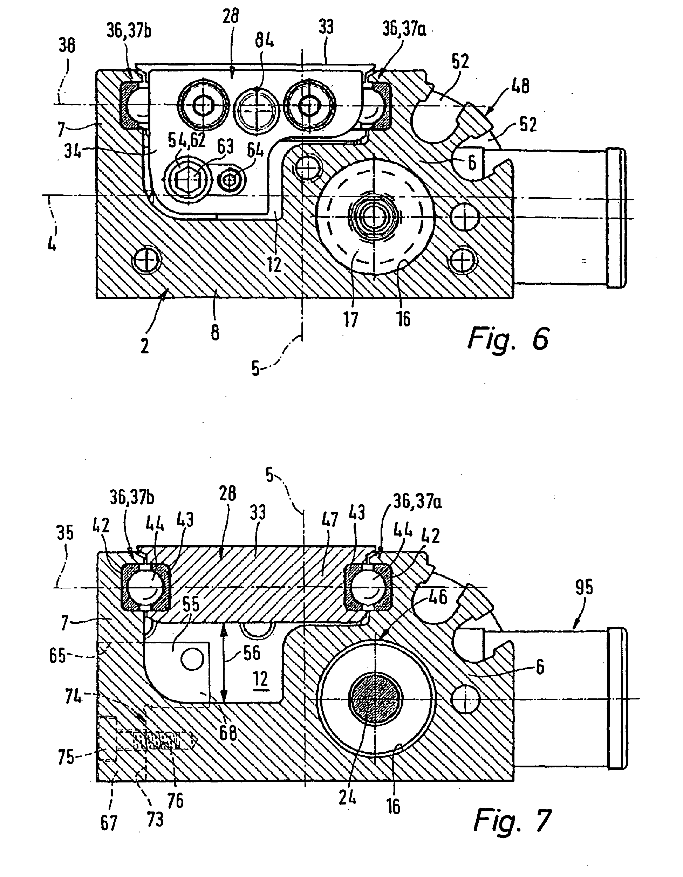

Das Antriebsgehäuse 2 ist im Querschnitt bevorzugt im Wesentlichen U-förmig profiliert (siehe insbesondere Fig. 6 und 7), wobei die beiden den U-Schenkeln entsprechenden Gehäuseabschnitte zwei parallel zueinander in Richtung der Längsachse 3 verlaufende erste und zweite Seitenwände 6, 7 definieren. Der dem U-Verbindungssteg entsprechende Gehäuseabschnitt bildet eine Bodenwand 8, die gemeinsam mit den beiden Seitenwänden 6, 7 eine kanalartige Gehäuseausnehmung 12 begrenzen, die an der der Bodenwand 8 entgegengesetzten Längsseite offen ist.

An der rückwärtigen Stirnseite 13 ist die kanalartige Gehäuseausnehmung 12 durch eine an die Stirnfläche des Antriebsgehäuses 2 angesetzte stirnseitige Abschlusswand 14 begrenzt. An der entgegengesetzten vorderen Stirnseite 15 ist die Gehäuseausnehmung 12 hingegen offen.

Die erste Seitenwand 6 hat in Richtung der Querachse 4 eine größere Dicke als die verhältnismäßig schmale zweite Seitenwand 7. Dies rührt von einem in ihrem Innern ausgebildeten, längsverlaufenden und ringsum geschlossenen Hohlraum her, der als Antriebsraum 16 bezeichnet sei, da sich in seinem Innern zu einer Linearbewegung in Richtung der Längsachse 3 antreibbare Antriebsmittel 17 befinden.

Die Antriebsmittel 17 bestehen beim Ausführungsbeispiel aus einem im Antriebsraum 16 verschiebbar angeordneten Kolben, der den Antriebsraum 16 unter Abdichtung in eine vordere und eine rückwärtige Arbeitskammer 18, 19 unterteilt. In jede Arbeitskammer 18, 19 mündet ein gesonderter Fluidkanal 22a, 22b, durch den hindurch ein fluidisches Druckmedium eingespeist oder abgeführt werden kann, um den Kolben 17 so gesteuert zu beaufschlagen, dass er sich in einer gewünschten Weise verlagert. Die Fluidversorgung geschieht über nicht näher dargestellte Fluidschläuche, die an mit den Fluidkanälen 22a, 22b kommunizierenden Anschlussöffnungen 23 anschließbar sind, welche sich zweckmäßigerweise an der Außenfläche der stirnseitigen Abschlusswand 14 befinden.

Eine als Kolbenstange ausgebildete Koppelstange 24 ist einerseits an dem Kolben 17 befestigt und ragt andererseits im Bereich der vorderen Stirnseite 15 aus dem Antriebsgehäuse 2 heraus. Dabei durchsetzt sie unter Abdichtung einen von der vorderen Stirnseite 15 her in den Antriebsraum 16 eingesetzten stopfenartigen Abschlussdeckel 25, der mittels eines das Antriebsgehäuse 2 durchsetzenden Querstiftes 26 axial fixiert ist. Den rückwärtigen dichten Abschluss des Antriebsraumes 16 bewirkt die stirnseitige Abschlusswand 14, die die Mündung des Antriebsraumes 16 überdeckt.

Der aus dem Antriebsgehäuse 2 herausragende Endabschnitt der Koppelstange 24 greift in zug- und druckfester Weise an einem Verbindungsjoch 27 an, das Bestandteil eines außen am Antriebsgehäuse 2 linear in Richtung der Längsachse 3 verstellbar geführten Schlittens 28 ist. Somit sind die Antriebsmittel 17 mit dem Schlitten 28 antriebsmäßig gekoppelt, und der Schlitten 18 führt bei entsprechender Betätigung der Antriebsmittel 17 eine gleichgerichtete lineare Hubbewegung 32 aus.

Wie insbesondere aus Fig. 6 und 7 ersichtlich ist, nimmt der Antriebsraum 16 innerhalb des Antriebsgehäuses 2 eine bezogen auf die Querachse 4 außermittige Position ein. Das Zentrum des Antriebsraumes 16 ist also in Richtung der Querachse 4 gegenüber dem Querschnittszentrum des Antriebsgehäuses 2 zum Gehäuserand hin versetzt.

Der Schlitten 28 hingegen ist der kanalartigen Gehäuseausnehmung 12 zugeordnet, wobei er ein sich in Richtung der Längsachse 3 an das Verbindungsjoch 27 anschließendes plattenartiges Schlittenhauptteil 33 aufweist, an dessen dem Verbindungsjoch 27 entgegengesetzter Rückseite noch eine bevorzugt plattenartige Tragwand 34 angesetzt ist.

Das Schlittenhauptteil 33 ist so ausgerichtet, dass seine Erstreckungsebene 35 rechtwinkelig zur Hochachse 5 verläuft.

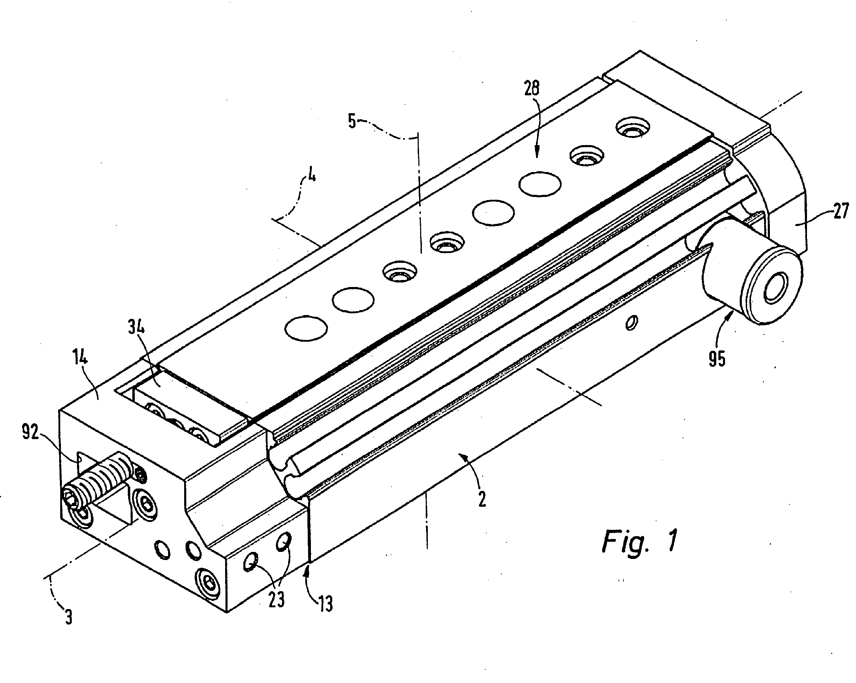

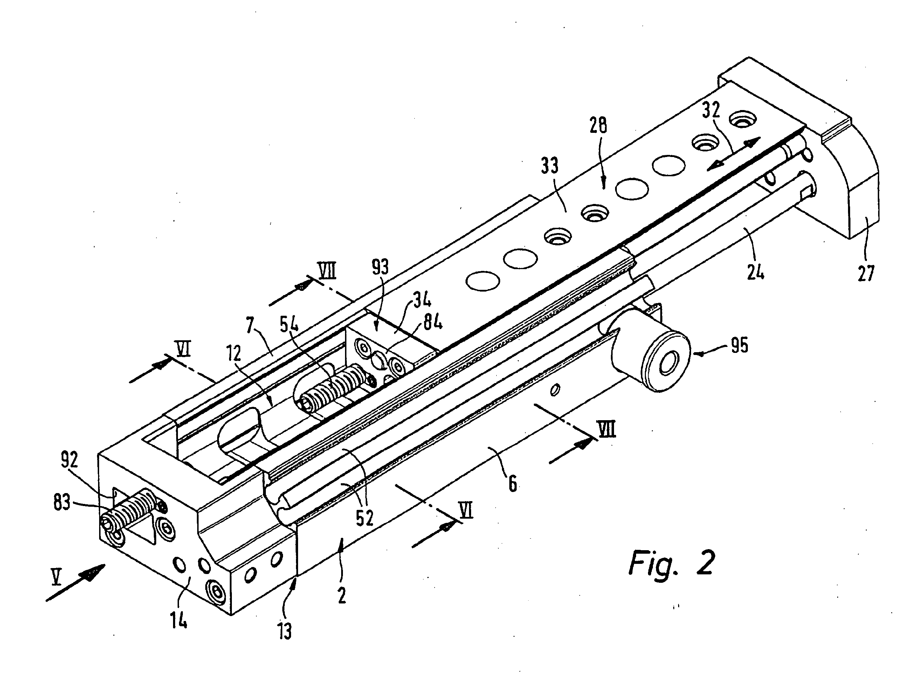

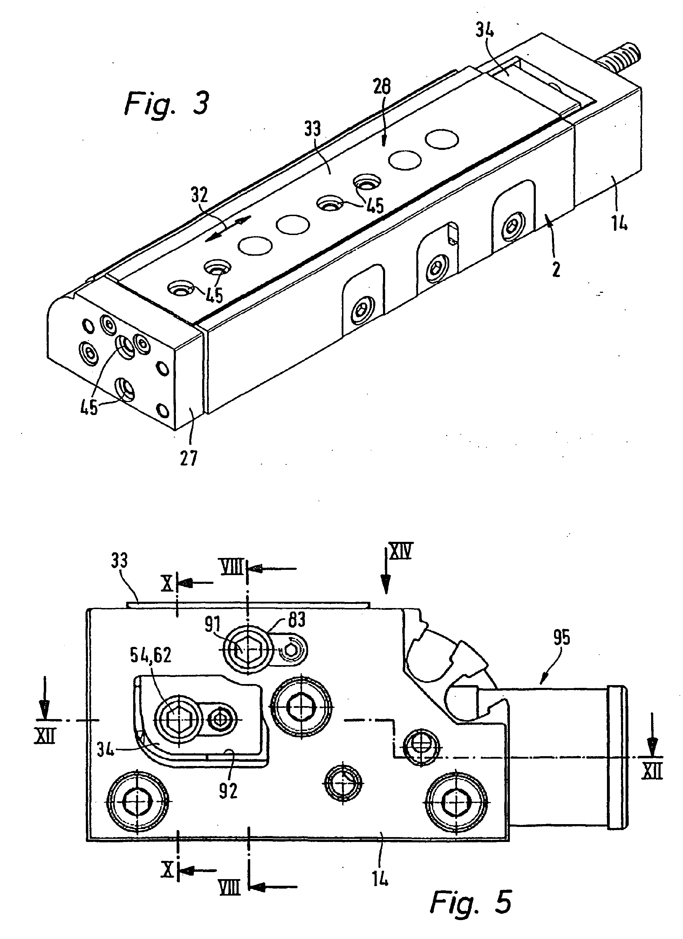

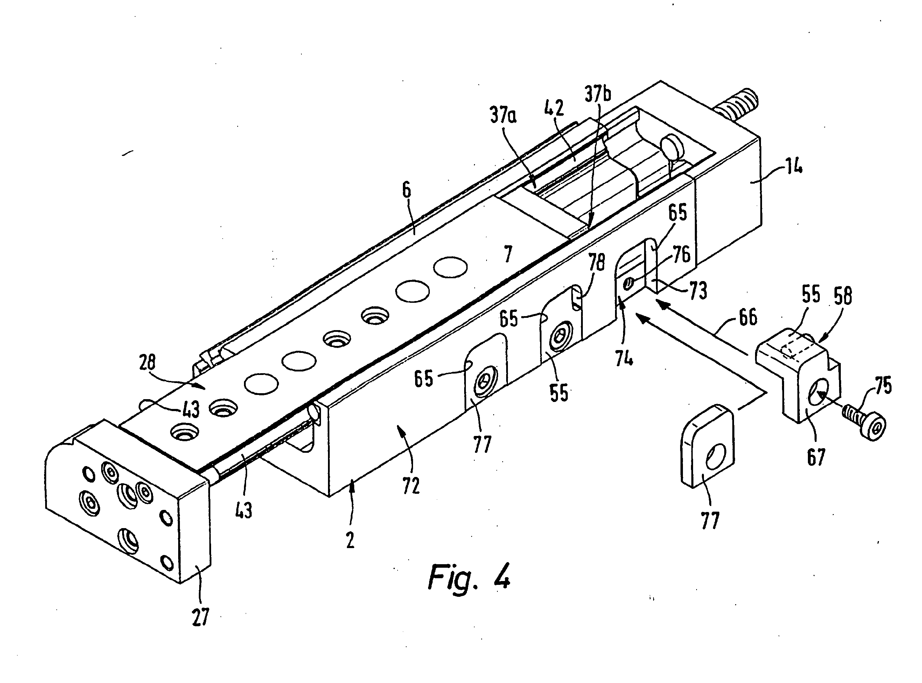

Die Länge des Schlittens 28 entspricht im Wesentlichen derjenigen des Antriebsgehäuses 2, wobei sich der Schlitten 28 vor allem mit seinem Schlittenhauptteil 33 im Bereich der offenen Längsseite der kanalartigen Gehäuseausnehmung 12 entlang dieser erstreckt. Somit bildet er praktisch eine Abdeckung für die offene Längsseite der Gehäuseausnehmung 12, wobei die abgedeckte Länge variabel und von der momentanen Position des Schlittens 28 abhängig ist. Ist die Koppelstange 24 weitestmöglich in den Antriebsraum 16 eingefahren, ergibt sich die aus Fig. 1 und 3 ersichtliche eingefahrene Schlittenposition, in der der Schlitten 28 die kanalartige Gehäuseausnehmung 12 über praktisch ihre gesamte Länge hinweg abdeckt. Ist die Koppelstange 24 hingegen weiter aus dem Antriebsgehäuse 2 ausgefahren, ragt auch der Schlitten 28 weiter über die vordere Stirnseite 15 des Antriebsgehäuses 2 hinaus, sodass nurmehr der der vorderen Stirnseite 15 zugeordnete Längenabschnitt der Gehäuseausnehmung 12 vom Schlitten 28 abgedeckt wird, während die Gehäuseausnehmung 12 im Übrigen offen liegt (Fig. 2 und 4).

Der Schlitten 28 ist in Richtung der Hochachse 5 so versenkt in der kanalartigen Gehäuseausnehmung 12 angeordnet, dass er an seinen beiden Längsseiten von den beiden Seitenwänden 6, 7 flankiert wird. Dies ist aus Fig. 7 gut ersichtlich. Als Resultat ergibt sich, dass der Schlitten 28 nicht oder nur geringfügig in Richtung der Hochachse 5 über das Antriebsgehäuse 2 vorsteht, was eine verhältnismäßig niedrige Bauhöhe zulässt.

Zur Führung und Abstützung des Schlittens 28 bezüglich des Antriebsgehäuses 2 ist eine Führungseinrichtung 36 vorgesehen, die über zwei parallel und mit Abstand zueinander angeordnete Führungseinheiten 37a, 37b verfügt, die in Richtung der Querachse 4 zwischen dem Schlitten 28 und dem Antriebsgehäuse 2 platziert sind. Genauer gesagt wird der Schlitten 28 an seinen einander entgegengesetzten Längsseiten außen von den beiden Führungseinheiten 37a, 37b flankiert, wobei jede Führungseinheit 37a, 37b wiederum von einem Endabschnitt der am Schlitten 28 vorbeigreifenden Seitenwände 6, 7 flankiert ist. Gemäß Fig. 6 und 7 erstrecken sich die beiden Führungseinheiten 37a, 37b gemeinsam in einer zur Hochachse 5 rechtwinkeligen Führungsebene 38, wobei diese Führungsebene 38 beim Ausführungsbeispiel mit der Erstreckungsebene 35 des Schlittenhauptteils 33 zusammenfällt.

Jede Führungseinheit 37a, 37b besitzt eine an der der jeweils anderen Seitenwand zugewandten Innenseite der zugeordneten ersten bzw. zweiten Seitenwand 6, 7 angeordnete gehäuseseitige Führungsbahn 42. Diese gehäuseseitigen Führungsbahnen 42 erstrecken sich zweckmäßigerweise über die gesamte Länge des Antriebsgehäuses 2. Jeder gehäuseseitigen Führungsbahn 42 liegt in Richtung der Querachse 4 eine schlittenseitige Führungsbahn 43 gegenüber, die sich entlang des Schlittenhauptteils 33 erstreckt. Zwischen jedem Paar einander zugeordneter gehäuseseitiger und schlittenseitiger Führungsbahnen 42, 43 befindet sich eine Lagerelementanordnung 44, die sich insbesondere aus einer Gruppe von in einem Käfig zusammengefassten Wälzlagerelementen zusammensetzt. Führt der Schlitten 28 eine Hubbewegung 32 aus, läuft die Lagerelementanordnung 44 an den mit ihr kooperierenden Führungsbahnen 42, 43 ab, sodass sich eine präzise Linearführung für den Schlitten 28 einstellt.

Die Führungsbahnen 42, 43 sind bevorzugt an leistenförmigen Führungselementen ausgebildet, die an dem Antriebsgehäuse 2 bzw. dem Schlitten 28 fest angebracht sind.

Über die Führungseinrichtung 36 werden am Schlitten 28 angreifende Kräfte in das Antriebsgehäuse 2 eingeleitet. Diese Kräfte können von einer beliebigen Masse herrühren, die an dem Schlitten 28 zum Zwecke einer Verlagerung befestigt wird. Bei dieser Masse kann es sich beispielsweise um eine Komponente einer Maschine oder um einen weiteren Linearantrieb handeln. An dem Schlitten 28 angeordnete Befestigungsmittel 45, beispielsweise in Gestalt von Gewindebohrungen, ermöglichen die lösbare Befestigung der jeweiligen Last. Diese Befestigungsmittel 45 sind zweckmäßigerweise sowohl an dem Schlittenhauptteil 33 als auch an dem Verbindungsjoch 27 vorgesehen.

Die Führungseinheiten 37a, 37b sind vorzugsweise so installiert, dass die sich ergebende Führungsebene 38 in Richtung der Hochachse 5 versetzt zum Antriebsraum 16 angeordnet ist. Die Größe des Versatzes ist insbesondere so gewählt, dass das Schlittenhauptteil 33 in Richtung der Hochachse 5 höher liegt als der obere Scheitelbereich 46 des Antriebsraumes 16. Auf diese Weise ergibt sich die beim Ausführungsbeispiel realisierte vorteilhafte Möglichkeit, die gehäusefeste Führungsbahn 42 der der ersten Seitenwand 6 zugeordneten ersten Führungseinheit 37a in Richtung der Hochachse 5 über dem Antriebsraum 16 zu platzieren, sodass der Antriebsraum 16 in Richtung der Querachse 4 wenigstens ein Stück weit von dem die schlittenseitige Führungsbahn 43 der ersten Führungseinheit 37a tragenden längsseitigen Randabschnitt 47 des Schlittens 28 übergriffen wird.

Es kann insbesondere vorgesehen sein, dass sich die gehäuseseitige Führungsbahn 42 der ersten Führungseinheit 37a im Wesentlichen in der Zone über dem oberen Scheitelbereich 46 des Antriebsraumes 16 befindet.

Der Schlitten 28 ist also so angeordnet, dass er den Antriebsraum 16 ein Stück weit in Querrichtung des Antriebsgehäuses 2 überlappt, andererseits aber gemeinsam mit den beiden Seitenwänden 6, 7 und der Bodenwand 8 einen Hohlraum begrenzt, der in der noch zu beschreibenden Weise sehr gut für Hubbegrenzungsmaßnahmen nutzbar ist.

Da die beiden Führungseinheiten 37a, 37b in Richtung der Querachse 4 einen großen Abstand zueinander aufweisen, ergibt sich eine gute Abstützung des Schlittens 28 gegen an ihm angreifende Kippmomente.

Zweckmäßigerweise überragt der Schlitten 28 den Antriebsraum 16 nur ein Stück weit, sodass längsseits neben dem zugeordneten Randabschnitt 47 des Schlittens 28 ein unabgedeckter Randabschnitt 48 der ersten Seitenwand 6 des Antriebsgehäuses 2 verbleibt, der zur Integration einer oder mehrerer, in Richtung der Längsachse 3 verlaufender Verankerungsnuten 52 nutzbar ist. Diese Verankerungsnuten 52 ermöglichen insbesondere die Verankerung von Sensoren, mit denen sich eine berührungslose Positionserfassung der im Antriebsraum 16 angeordneten Antriebsmittel 17 bewerkstelligen lässt. Auf diese Weise können letztlich die interessierenden Hubpositionen des Schlittens 28 detektiert werden.

Indem der vom Schlitten 28 unabgedeckte Randabschnitt 48 der zweiten Seitenwand 7 eine abgerundete Kontur besitzt, können problemlos mehrere und insbesondere zwei Verankerungsnuten ohne gegenseitige Behinderung längsseits nebeneinanderliegend realisiert werden.

Der Linearantrieb ist mit Hubbegrenzungsmitteln 53 ausgestattet, die eine variable Hubbegrenzung des Schlittens 28 bei beiden Hubrichtungen ermöglichen. Somit besteht die Möglichkeit, unabhängig von dem durch die Antriebsmittel 17 realisierbaren Hub die im ausgefahrenen Zustand gewünschte ausgefahrene Schlittenendposition und die im eingefahrenen Zustand gewünschte eingefahrene Schlittenendposition vorzugeben. Die Hubbegrenzungsmittel 53 wirken mittelbar oder unmittelbar zwischen dem Antriebsgehäuse 2 und dem Schlitten 28.

Zur Vorgabe der ausgefahrenen Schlittenendposition sind ein am Schlitten 28 angeordneter erster Anschlag 54 und ein in dessen Bewegungsbahn ragender, gehäusefester erster Gegenanschlag 55 vorgesehen. Beide Anschläge befinden sich innerhalb der kanalartigen Gehäuseausnehmung 12 in dem Höhenabschnitt 56, der bei eingefahrenem Schlitten 28 in Höhenrichtung zwischen dem Schlitten 28 und der Bodenwand 8 definiert ist.

Der erste Anschlag 54 ist an der der stirnseitigen Abschlusswand 14 zugewandten rückwärtigen Stirnseite des Schlittens 28 angeordnet, wobei er zweckmäßigerweise an dem in den Höhenabschnitt 56 ragenden Abschnitt der Tragwand 34 angeordnet ist. Der erste Anschlag 54 hat eine in Ausfahrrichtung, also zum Verbindungsjoch 27 hin, orientierte erste Anschlagfläche 57, der eine am ersten Gegenanschlag 55 angeordnete erste Gegenanschlagfläche 58 zugewandt ist, wobei sich der erste Gegenanschlag 55 in einem Bereich der kanalartigen Gehäuseausnehmung 12 befindet, der von dem Schlittenhauptteil 33 übergriffen wird. Der erste Gegenanschlag 55 wird somit durch den Schlitten 28 zur Umgebung hin abgeschirmt.

Beim Ausführungsbeispiel ist der erste Anschlag 54 als Anschlagschraube 62 ausgebildet, die die Tragwand 34 durchsetzt, wobei ein die erste Anschlagfläche 57 aufweisender Anschlagkopf unter dem Schlitten 28 liegt, während ein mit einem Gewinde versehener Einstellschaft rückseitig in Richtung zur stirnseitigen Abschlusswand 14 von der Tragwand 34 absteht. Am freien Ende des Einstellschaftes der Anschlagschraube 62 befindet sich eine den Angriff eines Schraubwerkzeuges ermöglichende Betätigungspartie 63, wobei die Möglichkeit besteht, durch Verdrehen der Anschlagschraube 62 die Axialposition der ersten Anschlagfläche 57 mit Bezug zum Schlitten 28 axial, insbesondere stufenlos, variabel zu justieren. Geeignete Kontermittel 64 erlauben ein Sichern der getroffenen Einstellung.

Zur Installation des ersten Gegenanschlages 55 ist die in Richtung der Querachse 4 weiter vom Antriebsraum 16 entfernte zweite Seitenwand 7 mit mehreren Wanddurchbrechungen 65 versehen, die jeweils die kanalartige Gehäuseausnehmung 12 mit der Umgebung des Antriebsgehäuses 2 verbinden, wobei der erste Gegenanschlag 55 von außen her so in eine der Wanddurchbrechungen 65 eingesetzt ist, dass er seitlich in die Gehäuseausnehmung 12 und dort in die Bewegungsbahn des ersten Anschlages 54 hineinragt.

Die Wanddurchbrechungen 65 sind in der Hubrichtung des Schlittens 28 mit Abstand zueinander angeordnet. Somit kann durch wahlweise Bestückung einer dieser Wanddurchbrechungen 65 der mögliche Ausfahrhub und mithin die vorgegebene ausgefahrene Schlittenendposition mehrstufig grob vorgegeben werden. Beim Ausführungsbeispiel sind insgesamt drei Wanddurchbrechungen 65 vorgesehen, wobei der erste Gegenanschlag 55 in der mittleren Wanddurchbrechung 65 installiert ist. Er könnte aber auch beispielsweise, wie dies in Fig. 4 angedeutet ist, in eine der beiden anderen Wanddurchbrechungen 65 eingesetzt werden, um zu erreichen, dass der Schlitten in der ausgefahrenen Schlittenendposition mehr oder weniger weit aus dem Antriebsgehäuse 2 ausgefahren ist.

Man hat also die Möglichkeit, durch selektive Bestückung der Wanddurchbrechungen 65 mit einem ersten Gegenanschlag 55 eine Grobeinstellung des Ausfahrhubes vorzunehmen, um dann unter Justierung des ersten Anschlages 54 eine abschließende Feineinstellung vorzunehmen.

Die Anzahl der Wanddurchbrechungen 65 und auch deren Abstand untereinander wird sich in der Regel an der Baulänge des Antriebsgehäuses 2 und am maximal möglichen Schlittenhub orientieren. Ist der maximal mögliche Schlittenhub beispielsweise sehr gering, kann auch bereits eine einzige Wanddurchbrechung 65 zur Installation eines ersten Gegenanschlages 55 ausreichen, sodass dort dann die weitere Einstellung ausschließlich über das Justieren des ersten Anschlages 54 bewerkstelligt wird.

In der Einsetzrichtung 66 betrachtet ist die Außenkontur des ersten Gegenanschlages 55 so an die Innenkontur der betreffenden Wanddurchbrechung 65 angepasst, dass das Einsetzen ein Steckvorgang ist, im Rahmen dessen sich eine formschlüssige Verbindung zwischen dem ersten Gegenanschlag 55 und dem Antriebsgehäuse 2 einstellt, die eine Abstützung des ersten Gegenanschlages 55 in der Hubrichtung des Schlittens 28, zumindest in dessen Ausfahrrichtung, bewirkt.

Zweckmäßigerweise verfügt der erste Gegenanschlag 55 über eine Haltepartie 67 und eine diesbezüglich im Querschnitt kleinere Anschlagpartie 68, wobei letztere die erste Gegenanschlagfläche 58 trägt und gegenüber der Haltepartie 67 in der Einsetzrichtung 66 vorsteht. Die Wanddurchbrechung 65 ist in der Einsetzrichtung 66 abgestuft und erweitert sich zur Außenfläche 72 hin zu einem Befestigungsabschnitt 73, der partiell durch eine nach außen weisende, von der Bodenwand 8 definierte Befestigungsfläche 74 begrenzt ist. Im eingesetzten Zustand liegt die Haltepartie 67 an der Befestigungsfläche 74 an, während die Anschlagpartie 68 an der Befestigungsfläche 74 vorbei in die Gehäuseausnehmung 12 ragt. Durch eine lösbare Schraubverbindung zwischen der Haltepartie 67 und dem die Befestigungsfläche 74 aufweisenden Gehäuseabschnitt lässt sich der erste Gegenanschlag 55 sicher fixieren. Exemplarisch ist in diesem Zusammenhang eine Befestigungsschraube 75 gezeigt, die die Haltepartie 67 unter Abstützung daran durchsetzt und in eine zur Befestigungsfläche 74 offene Gewindebohrung 76 des Antriebsgehäuses 2 einschraubbar ist.

Die momentan nicht für Anschlagzwecke benötigte Wanddurchbrechung 65 kann jeweils lösbar durch einen Deckel 77 verschlossen werden, der beispielsweise in der gleichen Weise wie der erste Gegenanschlag 55 befestigt wird, oder aber beispielsweise auch durch eine Rastverbindung. Durch das Verschließen mit einem Deckel wird einem Eindringen von Verunreinigungen vorgebeugt. Während der erste Gegenanschlag 55 insbesondere aus Metall besteht, können die verwendeten Deckel durchaus aus Kunststoffmaterial gefertigt sein.

Die Formgebung ist insbesondere so gewählt, dass sich im installierten Zustand des ersten Gegenanschlages 55 wie auch der Deckel 77 außen ein bündiger Abschluss mit der Außenfläche 72 des Antriebsgehäuses 2 einstellt.

Um bei Bedarf die Hubbegrenzungsfunktion überprüfen zu können, ist beim Ausführungsbeispiel die Außenkontur des ersten Gegenanschlages 55 so ausgebildet, dass sie nicht vollumfänglich der Innenkontur der zugeordneten Wanddurchbrechung 65 entspricht, sodass zwischen den beiden Konturen ein durchgehender Freiraum verbleibt, der ein Sichtfenster 78 definiert, durch das hindurch am ersten Gegenanschlag 55 vorbei von außen her ein Einblick auf die in der Gehäuseausnehmung 12 platzierte Anschlagpartie 68 möglich ist.

Um den gegenseitigen Aufprall zu minimieren, ist der Gegenanschlag 55 mit einem zum ersten Anschlag 54 ragenden gummielastischen Pufferelement 82 bestückt. Zusätzlich oder alternativ könnte insbesondere der erste Anschlag 54 nicht als reiner Festanschlag wie beim Ausführungsbeispiel ausgebildet sein, sondern kombiniert mit Stoßdämpfermitteln.

Um auch die eingefahrene Schlittenendposition variabel vorgeben zu können, enthalten die Hubbegrenzungsmittel 53 zusätzlich noch einen vom Antriebsgehäuse 2 getragenen zweiten Anschlag 83, der vorzugsweise an der stirnseitigen Abschlusswand 14 angeordnet ist und eine in Richtung der Längsachse 3 dem Schlitten 28 zugewandte zweite Anschlagfläche 85 besitzt. Letzterer liegt eine in Einfahrrichtung des Schlittens orientierte zweite Gegenanschlagfläche 86 gegenüber, die an einem am rückwärtigen Endbereich des Schlittens 28 angeordneten zweiten Gegenanschlag 84 vorgesehen ist. Letzterer ist beim Ausführungsbeispiel unmittelbar von der Stirnfläche der Tragwand 34 gebildet, während der zweite Anschlag 83 vergleichbar dem ersten Anschlag 54 als Anschlagschraube 87 ausgeführt ist, die durch die stirnseitige Abschlusswand 14 hindurchgeschraubt ist und sich relativ zu dieser axial justieren lässt. Die Justierung und Fixierung erfolgt in gleicher Weise wie bei der den ersten Anschlag 54 bildenden Anschlagschraube 62.

Auch dem zweiten Anschlag 83 ist beim Ausführungsbeispiel ein Pufferelement 88 zur Aufprallreduzierung zugeordnet.

Für alle Anschlagmittel gilt, dass bei Bedarf Stoßdämpfmittel vorgesehen sein können, entweder gesondert oder in Kombination mit dem betreffenden Anschlag, um insbesondere eine fluidische Endlagendämpfung, beispielsweise unter Verwendung hydraulischer Stoßdämpfer, vornehmen zu können.

Der zweite Anschlag 83 ist zur Veränderung der eingefahrenen Schlittenendposition ohne weiteres von der Rückseite des Antriebsgehäuses 2 her zugänglich, da seine den Angriff eines Einstellwerkzeuges ermöglichende Betätigungspartie 91 auf der dem Schlitten 28 entgegengesetzten Außenseite der stirnseitigen Abschlusswand 14 liegt.

Um eine vergleichbare Justierung auch des ersten Anschlages 54 vornehmen zu können, ist die Abschlusswand 14, in Hubrichtung des Schlittens 28 mit dem ersten Anschlag 54 fluchtend, mit einer fensterartigen Durchbrechung 92 versehen. Durch diese Durchbrechung 92 hindurch kann unabhängig von der Hubposition des Schlittens 28 eine Betätigung des ersten Anschlages 54 zu Justierzwecken erfolgen.

Es ergibt sich ferner der Vorteil, dass der erste Anschlag 62 mit seinem rückseitig über den Schlitten 28 vorstehenden Längenabschnitt in die fensterartige Durchbrechung 92 eintauchen oder gar durch diese Durchbrechung 92 hindurchragen kann, wenn der rückwärtige Endbereich des Schlittens 28 in der eingefahrenen Schlittenendposition in unmittelbarer Nähe zu der stirnseitigen Abschlusswand 14 zu liegen kommt. Dies ermöglicht eine beträchtliche Einsparung an Baulänge für das Antriebsgehäuse 2.

Beim Ausführungsbeispiel kommt der weitere Vorteil hinzu, dass der den ersten Anschlag 54 tragende Endbereich des Schlittens 28 - vorliegend gebildet von der Tragwand 34 - als Ausschiebekopf 93 fungiert, der beim Einfahrhub des Schlittens eventuell in der Gehäuseausnehmung 12 vorhandene Verunreinigungen bzw. Fremdkörper durch die fensterartige Durchbrechung 92 hindurch zur Umgebung hin ausstößt.

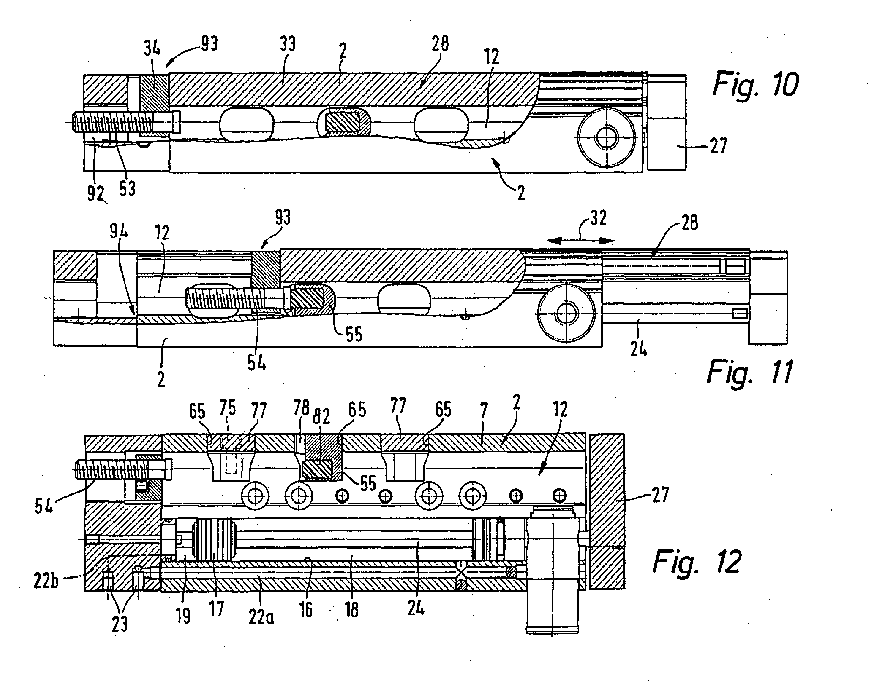

Damit die Verunreinigungen nicht etwa durch einen störenden Absatz im Übergangsbereich zu der Abschlusswand 14 zurückgehalten werden, ist die Innenkontur der fensterartigen Durchbrechung 92 zweckmäßigerweise so ausgebildet, dass sie mit den Innenflächen der die Gehäuseausnehmung 12 definierenden Seiten- und Bodenwände 6, 7, 8, zumindest im Bereich der Bodenwand 8, wenigstens fluchtet, vorzugsweise aber sogar wenigstens minimal quer zur Längsachse 3 zurückspringt. Der zurückspringende Bereich ist in Fig. 11 durch die Bezugsziffer 94 kenntlich gemacht.

Eine Berührung zwischen dem Ausschiebekopf 93 und dem Antriebsgehäuse 2 ist zur Gewährleistung der Ausschubfunktion nicht erforderlich, auch kann auf eine elastische Dichtung in der Regel verzichtet werden. Indem die Tragwand 34 eine der Innenkontur der Gehäuseausnehmung 12 im Wesentlichen entsprechende Außenkontur aufweist, kann ein sehr geringes Spaltmaß eingehalten werden, sodass auch ohne Berührung die Ausstoßfunktion gewährleistet ist. Wie die Zeichnung zeigt, ragt der Ausschiebekopf 93 zumindest annähernd bis zu der der offenen Längsseite der Gehäuseausnehmung 12 gegenüberliegenden Bodenwand 8 der kanalartigen Gehäuseausnehmung 12.

Zweckmäßigerweise ist der Linearantrieb noch mit einer Klemmeinheit 95 ausgestattet, mit der sich die Koppelstange 24 während einer gewünschten Zeitspanne axial unbeweglich bezüglich des Antriebsgehäuses 2 festsetzen lässt.

Die Klemmeinheit 95 ist patronenartig ausgebildet und in dem dem Abschlussdeckel 25 zum Verbindungsjoch 27 axial vorgelagerten Bereich von der Seite her in eine Ausnehmung 96 des Antriebsgehäuses 2 eingesetzt, wobei sie von der Koppelstange 24 durchsetzt wird.

Die Klemmeinheit 95 ist insbesondere für fluidische Betätigung ausgelegt. Sie enthält zweckmäßigerweise zwei um eine rechtwinkelig zur Längsachse der Koppelstange 24 verlaufende Schwenkachse 98 verschwenkbare Klemmbacken 97, die beide von der Koppelstange 24 durchsetzt werden und die durch eine sich zwischen ihnen abstützende Federeinrichtung 99 normalerweise so auseinandergespreizt werden, dass sie klemmend auf den Außenumfang der Koppelstange 24 einwirken. Um die Blockierung aufzuheben, kann über einen Fluidanschluss 100 ein Druckmedium eingespeist werden, das einen Betätigungskolben 101 gegen die Klemmbacken 97 verschiebt, sodass diese entgegen der Federkraft in eine Lösestellung verschwenkt werden, in der die Koppelstange 24 für die Axialbewegung freigegeben ist.

Indem die Klemmeinheit 95 exakt in die zugeordnete Gehäuseausnehmung 12 eingepasst ist, kann eine in Hubrichtung des Schlittens 28 spielfreie Befestigung gewährleistet werden, was ein spielfreies Festsetzen der Kolbenstange und somit auch des mit dieser verbundenen Schlittens 28 gewährleistet.

## Patentansprüche

1. Linearantrieb, mit einem in kartesischer Anordnung eine Längsachse (3), eine Querachse (4) und eine Hochachse (5) aufweisenden Antriebsgehäuse (2), das einen längsverlaufenden, in Richtung der Querachse (4) außermittig angeordneten Antriebsraum (16) definiert, in dem sich zu einer Linearbewegung antreibbare Antriebsmittel (17) befinden, die mit einem außen am Antriebsgehäuse (2) über eine Führungseinrichtung (36) linear verstellbar geführten Schlitten (28) antriebsmäßig gekoppelt sind, wobei die Führungseinrichtung (36) zwei parallel und mit Abstand zueinander in einer zur Hochachse (5) rechtwinkeligen Führungsebene (38) angeordnete, jeweils eine gehäuseseitige Führungsbahn (42) enthaltende Führungseinheiten (37a, 37b) aufweist, die so angeordnet sind, dass der Schlitten (28) längsseits außen von den beiden Führungseinheiten (37a, 37b) flankiert wird, und wobei die Führungsebene (38) in Richtung der Hochachse (5) versetzt zum Antriebsraum (16) angeordnet ist, der in Richtung der Querachse (4) wenigstens ein Stück weit von einem längsseitigen Randabschnitt (47) des Schlittens (28) übergriffen wird, **dadurch gekennzeichnet, dass** das Antriebsgehäuse (2) seitlich neben dem Antriebsraum (16) eine kanalartige Gehäuseausnehmung (12) aufweist, deren offene Längsseite von dem Schlitten (28) überspannt wird, wobei beiden Seitenwänden (6, 7) der Gehäuseausnehmung (12) jeweils eine der gehäuseseitigen Führungsbahnen (42) zugeordnet ist, von denen sich eine über dem Antriebsraum (16) befindet, und wobei der Schlitten (28) die Gehäuseausnehmung (12) positionsabhängig über eine mehr oder weniger große Länge abdeckt, und dass zwischen dem Schlitten (28) und dem Antriebsgehäuse (2) wirksame Hubbegrenzungsmittel (53) vorhanden sind, die einen innerhalb der Gehäuseausnehmung (12) angeordneten, vom Schlitten (28) übergriffenen gehäusefesten ersten Gegenanschlag (55) aufweisen, der mit einem innerhalb der Gehäuseausnehmung am Schlitten (28) angeordneten ersten Anschlag (54) zusammenwirkt.

2. Linearantrieb nach Anspruch 1, **dadurch gekennzeichnet, dass** sich die über dem Antriebsraum (16) befindende gehäuseseitige Führungsbahn (42) im Wesentlichen über dem in Richtung der Hochachse (5) orientierten oberen Scheitelbereich (46) des Antriebsraumes (16) befindet.

3. Linearantrieb nach Anspruch 1 oder 2, **dadurch gekennzeichnet, dass** in dem sich an den den Antriebsraum (16) übergreifenden Randabschnitt (47) des Schlittens (28) anschlie-βenden Randabschnitt (48) des Antriebsgehäuses (2) mindestens eine längsverlaufende Verankerungsnut (52) zur Sensorbefestigung ausgebildet ist.

4. Linearantrieb nach einem der Ansprüche 1 bis 3, **dadurch gekennzeichnet, dass** der Schlitten (28) in Richtung der Hochachse (5) so versenkt in der kanalartigen Gehäuseausnehmung (12) angeordnet ist, dass er an seinen beiden mit jeweils einer schlittenseitigen Führungsbahn (43) versehenen Längsseiten von den Seitenwänden (6, 7) der Gehäuseausnehmung (12) flankiert wird.

5. Linearantrieb nach einem der Ansprüche 1 bis 4, **dadurch gekennzeichnet, dass** die in Richtung der Querachse (4) vom Antriebsraum (16) weiter entfernte Seitenwand (7) der Gehäuseausnehmung (12) mindestens eine Wanddurchbrechung (65) aufweist, in die der erste Gegenanschlag (55) von außen her so einsetzbar ist, dass er seitlich in die Gehäuseausnehmung (12) und dort in die Bewegungsbahn des ersten Anschlages (54) hineinragt.

6. Linearantrieb nach Anspruch 5, **dadurch gekennzeichnet, dass** in der Seitenwand (7) mehrere, in Hubrichtung des Schlittens (28) zueinander beabstandete Wanddurchbrechungen (65) vorgesehen sind, die wahlweise mit dem ersten Gegenanschlag (55) bestückbar sind.

7. Linearantrieb nach einem der Ansprüche 1 bis 6, **dadurch gekennzeichnet, dass** der erste Anschlag (54) in Hubrichtung des Schlittens (28) mit einer fensterartigen Durchbrechung (92) einer die kanalartige Gehäuseausnehmung (12) stirnseitig begrenzenden Abschlusswand (14) des Antriebsgehäuses (2) fluchtet.

8. Linearantrieb nach Anspruch 7, **dadurch gekennzeichnet, dass** der der fensterartigen Durchbrechung (92) zugewandte Endbereich des Schlittens (28) einen Ausschiebekopf (93) zum Ausschieben von Verunreinigungen aus der kanalartigen Gehäuseausnehmung (12) durch die fensterartige Durchbrechung (92) hindurch bildet.

9. Linearantrieb nach einem der Ansprüche 1 bis 8, **dadurch gekennzeichnet, dass** die Antriebsmittel (17) mit einer Koppelstange (24) verbunden sind, die stirnseitig aus dem Antriebsgehäuse (2) herausragt und am Schlitten (28) angreift.

10. Linearantrieb nach Anspruch 9, **gekennzeichnet durch** eine in das Antriebsgehäuse (2) eingesetzte und von der Koppelstange (24) durchsetzte Klemmeinheit (95) zum axial unbeweglichen Festsetzen der Koppelstange (24) bezüglich des Antriebsgehäuses (2).

11. Linearantrieb nach einem der Ansprüche 1 bis 10, **dadurch gekennzeichnet, dass** das Antriebsgehäuse (2) insgesamt ein etwa U-förmiges Querschnittsprofil aufweist, wobei die eine der beiden Seitenwände (6) die eine gehäuseseitige Führungsbahn (42) und den Antriebsraum (16) und die andere Seitenwand (7) die andere gehäuseseitige Führungsbahn (42) aufweist.

## Claims

1. Linear drive with a drive housing (2) having in a Cartesian arrangement a longitudinal axis (3), a transverse axis (4) and a vertical axis (5), and defining a drive chamber (16) which runs longitudinally and is off-centre in the direction of the transverse axis (4) and in which are mounted drive means (17) which can be driven to perform a linear movement and are coupled for drive purposes to a slide (28) guided on the outside of the drive housing (2) for linear adjustment via a guide device (36), wherein the guide device (36) has two guide units (37a, 37b), arranged parallel to and with clearance from one another in a guide plane (38) running at right-angles to the vertical axis (5), each containing a housing-side guide track (42), with said guide units being so arranged that the slide (28) is flanked outside and on the long sides by the two guide units (37a, 37b), and wherein the guide plane (38) is offset relative to the drive chamber (16) along the vertical axis (5), said drive chamber being overlapped by a long-side edge section (47) of the slide (28) for at least a short distance along the transverse axis (4), **characterised in that** the drive housing (2) has at the side, alongside the drive chamber (16), a channel-like housing recess (12), the open side wall of which is covered by the slide (28), wherein each side wall (6, 7) of the housing recess (12) is assigned one of the housing-side guide tracks (42), one of which is located above the drive chamber (16), and wherein - depending on position - the slide (28) covers the housing recess (12) for a greater or smaller part of its length, and that there are provided between the slide (28) and the drive housing (2) effective travel limiting means (53) which have a first mating stop (55) fixed to the housing, mounted within the housing recess (12) and overlapped by the slide (28), and acting in conjunction with a first stop (54) provided on the slide (28) within the housing recess.

2. Linear drive according to claim 1, **characterised in that** the housing-side guide track (42) located over the drive chamber (16) is substantially above the upper top section (46) of the drive chamber (16) oriented along the vertical axis (5).

3. Linear drive according to claim 1 or 2, **characterised in that** one or more longitudinal anchoring slots (52) for sensor mounting is/are formed in the edge section (48) of the drive housing (2) adjoining the edge section (47) of the slide (28) overlapping the drive chamber (16).

4. Linear drive according to any of claims 1 to 3, **characterised in that** the slide (28) is so recessed in the channel-like housing recess (12) along the vertical axis (5) that it is flanked by the side walls (6, 7) of the housing recess (12) on both of its side walls, each provided with a slide-side guide track (43).

5. Linear drive according to any of claims 1 to 4, **characterised in that** the side wall (7) of the housing recess (12) which is further removed from the drive chamber (16) along the transverse axis (4) has one or more wall openings (65) in which the first mating stop (55) may be inserted from outside in such a way that it extends sideways into the housing recess (12) and there into the movement path of the first stop (54).

6. Linear drive according to claim 5, **characterised in that** there are provided in the side wall (7) several wall openings (65), spaced apart in the direction of travel of the slide (28), and which may be equipped alternately with the first mating stop (55).

7. Linear drive according to any of claims 1 to 6 **characterised in that**, in the direction of travel of the slide (28), the first stop (54) is aligned with a window-like aperture (92) of an end wall (14) of the drive housing (2) which bounds the end of the channel-like housing recess (12).

8. Linear drive according to claim 7, **characterised in that** the end section of the slide (28) facing the window-like aperture (92) forms a ram (93) for pushing contaminants out of the channel-like housing recess (12) through the window-like aperture (92).

9. Linear drive according to any of claims 1 to 8, **characterised in that** the drive means (17) are connected to a connecting rod (24) which extends from the end of the drive housing (2) and acts on the slide (28).

10. Linear drive according to claim 9, **characterised by** a clamping unit (95), inserted in the drive housing (2) and through which passes the connecting rod (24), for the axially immovable fixing of the connecting rod (24) relative to the drive housing (2).

11. Linear drive according to any of claims 1 to 10, **characterised in that** the drive housing (2) has an altogether roughly U-shaped cross-section, wherein one of the two side walls (6) has one housing-side guide track (42) and the drive chamber (16), and the other side wall (7) has the other housing-side guide track (42).

## Revendications

1. Dispositif d'entraînement linéaire comportant un boîtier de dispositif d'entraînement (2) présentant dans un système cartésien un axe longitudinal (3), un axe transversal (4) et un axe vertical (5), lequel boîtier définit un compartiment de dispositif d'entraînement (16) s'étendant longitudinalement et disposé excentré dans la direction de l'axe transversal (4), compartiment dans lequel se trouvent des moyens d'entraînement (17) pouvant être entraînés en un mouvement linéaire et qui sont accouplés en entraînement à un chariot (28) monté déplaçable linéairement à l'extérieur, par un dispositif de guidage (36), sur le boîtier de dispositif d'entraînement (2), le dispositif de guidage (36) comportant deux unités de guidage (37a, 37b) contenant chacune une voie de guidage (42) côté boîtier et disposées à distance l'une de l'autre, dans un plan de guidage (38) perpendiculaire à l'axe vertical (5), lesquelles unités de guidage sont disposées de manière que le chariot (38) soit flanqué dans le sens de la longueur, à l'extérieur, par les deux unités de guidage (37a, 37b), et le plan de guidage (38) étant disposé décalé, dans la direction de l'axe vertical (5), par rapport au compartiment de dispositif d'entraînement (16) sur au moins une partie duquel un tronçon de bordure (47) longitudinal du chariot (28) s'étend dans la direction de l'axe transversal (4), **caractérisé en ce que** le boîtier de dispositif d'entraînement (2) présente, sur le côté du compartiment de dispositif d'entraînement (16), un évidement de boîtier (12) de type canal dont le côté longitudinal ouvert est franchi par le chariot (28), à chacune des deux parois latérales (6, 7) de l'évidement de boîtier (12) étant associée l'une des voies de guidage (42) côté boîtier, dont une se trouve au-dessus du compartiment de dispositif d'entraînement (16), et le chariot (28) recouvrant l'évidement de boîtier (12) sur une longueur plus ou moins grande en fonction de sa position, et des moyens de limitation de course (53) étant prévus, agissant entre le chariot (28) et le boîtier de dispositif d'entraînement (2), qui présentent une première contre-butée (55) solidaire du boîtier, disposée à l'intérieur de l'évidement de boîtier (12) et sur laquelle passe le chariot (28), laquelle contre-butée coopère avec une première butée (54) disposée à l'intérieur de l'évidement de boîtier, sur le chariot (28).

2. Dispositif d'entraînement linéaire selon la revendication 1, **caractérisé en ce que** la voie de guidage (42) côté boîtier, se trouvant au-dessus du compartiment de dispositif d'entraînement (16), se trouve sensiblement au-dessus de la zone de sommet supérieure (46), orientée dans la direction de l'axe vertical (5), du compartiment de dispositif d'entraînement (16).

3. Dispositif d'entraînement linéaire selon la revendication 1 ou 2, **caractérisé en ce que** dans le tronçon de bordure (48) du boîtier de dispositif d'entraînement (2), se raccordant au tronçon de bordure (47) passant sur le compartiment de dispositif d'entraînement (16), du chariot (28), est formée au moins une rainure d'ancrage (52) s'étendant longitudinalement, pour la fixation d'un capteur.

4. Dispositif d'entraînement linéaire selon l'une des revendications 1 à 3, **caractérisé en ce que** le chariot (28) est disposé encastré, dans la direction de l'axe vertical (5), dans l'évidement de boîtier (12) de type canal, de telle manière que sur ses deux côtés longitudinaux, pourvus chacun d'une voie de guidage (43) côté chariot, il soit flanqué par les parois latérales (6, 7) de l'évidement de boîtier (12).

5. Dispositif d'entraînement linéaire selon l'une des revendications 1 à 4, **caractérisé en ce que** la paroi latérale (16) de l'évidement de boîtier (12), la plus éloignée du compartiment de dispositif d'entraînement (16), dans la direction de l'axe transversal (4), présente au moins un ajour de paroi (65) dans lequel la première contre-butée (55) peut être insérée de l'extérieur de manière qu'elle pénètre latéralement à l'intérieur de l'évidement de boîtier (12) et, à cet endroit, dans la trajectoire de la première butée (54).

6. Dispositif d'entraînement linéaire selon la revendication 5, **caractérisé en ce que** dans la paroi latérale (7) sont prévus plusieurs ajours de paroi (65) espacés les uns des autres dans la direction de la course du chariot (28), lesquels peuvent être équipés au choix de la première contre-butée (55).

7. Dispositif d'entraînement linéaire selon l'une des revendications 1 à 6, **caractérisé en ce que** la première butée (54) est alignée dans la direction de la course du chariot (28) avec un ajour (92) de type fenêtre d'une paroi de fermeture (14) du boîtier de dispositif d'entraînement (2), délimitant frontalement l'évidement de boîtier (12) de type canal.

8. Dispositif d'entraînement linéaire selon la revendication 7, **caractérisé en ce que** la zone d'extrémité du chariot (28), tournée vers l'ajour (92) de type fenêtre, forme une tête d'expulsion (93) pour expulser les impuretés de l'évidement de boîtier (12) de type canal à travers l'ajour (92) de type fenêtre.

9. Dispositif d'entraînement linéaire selon l'une des revendications 1 à 8, **caractérisé en ce que** les moyens d'entraînement (17) sont reliés à une tige d'accouplement (24) qui ressort frontalement du boîtier de dispositif d'entraînement (2) et agit sur le chariot (28).

10. Dispositif d'entraînement linéaire selon la revendication 9, **caractérisé par** une unité de serrage (95) insérée dans le boîtier de dispositif d'entraînement (2) et traversée par la tige d'accouplement (24) pour la fixation axialement fixe de la tige d'accouplement (24) par rapport au boîtier de dispositif d'entraînement (2).

11. Dispositif d'entraînement linéaire selon l'une des revendications 1 à 10, **caractérisé en ce que** le boîtier de dispositif d'entraînement (2) présente dans l'ensemble un profil de section transversale approximativement en U, l'une des deux parois latérales (6) présentant une voie de guidage (42) côté boîtier ainsi que le compartiment de dispositif d'entraînement (16), et l'autre paroi latérale (7) comportant l'autre voie de guidage (42) côté boîtier.
